# EUROPEAN PATENT APPLICATION

(11) **EP 1 408 311 A1**
(43) Date of publication of application: **14.04.2004**
(21) Application number: 02736146.8
(22) Date of filing: 18.06.2002
(51) Int. Cl.: G01D 5/245, G01P 3/487, H01F 1/11

(54) **MAGNETIC MEMBER FOR REVOLUTION DETECTOR**

(30) Priority: 19.06.2001 JP 2001184810
(71) Applicant: KOYO SEIKO CO., LTD., Osaka 542-0081 (JP); Koyo Sealing Techno Co., Ltd., Itano-gun, Tokushima 771-1295 (JP)
(72) Inventor: MORIMURA, Naoki, Koyo Seiko Co., Ltd., Osaka-shi, Osaka 542-0081 (JP); KASAHARA, Fumiaki, Koyo Seiko Co., Ltd., Osaka-shi, Osaka 542-0081 (JP); TAMURA, Tomomitsu, Koyo Sealing Techno Co., Ltd, Itano-gun, Tokushima 771-1295 (JP); NAMIRA, Eiji, Koyo Sealing Techno Co., LTD., Itano-gun, Tokushima 771-1295 (JP)
(74) Representative: Selting, Günther, Dipl.-Ing.
(86) International application number: PCT/JP2002/006040
(87) International publication number: WO 2002/103296

(57) **Abstract**

An annular elastic magnetic body 3 as the magnetic member for a rotation detector contains hydrogenated nitrile rubber as base material and not more than 90 weight percent strontium-based ferrite as a magnetism imparting component. Therefore, the annular elastic magnetic body 3 has no cracks in a thermal shock test (with thermal shock between -40°C and 150°C) and resists harsh conditions on operating temperature. The magnetic member contains not less than 80 weight percent the strontium-based ferrite and therefore ensures a magnetic flux density required for a rotation detector. Thus, the magnetic member for a rotation detector is resistant to harsh conditions on operating temperature and has a stable magnetic property.

## Description

### BACKGROUND OF THE INVENTION

The present invention relates to a magnetic member for a rotation detector that is used for an antilock brake system of an automobile or the like.

As an example of conventional rotation detectors, wheel speed detection devices have been used for antilock brake systems of automobiles. In recent years, wheel speed detection devices employing multi-pole pulser rings have been used increasingly. Such a multi-pole pulser ring is a multi-pole magnet in which an elastic magnetic member composed of high nitrile rubber (NBR) mixed with magnetic powder is bonded to a metal ring.

However, there is a possibility that harsh conditions on operating temperature (between -40°C and 150°C) may cause such a multi-pole pulser ring to have cracks in the elastic magnetic member and to have an abnormal magnetic property.

When the elastic magnetic member hardens to such an extent that cracks may be caused, there is a possibility that stresses due to the changes in temperature may cause anomalies such as separation in a bonded zone between the metal ring and the elastic magnetic member.

### SUMMARY OF THE INVENTION

Therefore, an object of the present invention is to provide a magnetic member for a rotation detector that is resistant to harsh conditions on operating temperature and that has a stable magnetic property.

In order to achieve the above object, there is provided a magnetic member for a rotation detector, comprising elastic magnetic material containing hydrogenated nitrile rubber as base material and containing strontium-based ferrite as a magnetism imparting component,
wherein a weight percentage of strontium-based ferrite in the elastic magnetic material is in a range of 80 to 90 weight percent.

The magnetic member for the rotation detector of the invention contains not more than 90 weight percent strontium-based ferrite as a magnetism imparting component combined with base material of hydrogenated nitrile rubber, therefore has no cracks in a thermal shock test (with thermal shock between -40°C and 150°C), and resists harsh conditions on operating temperature. With use of nitrile rubber (NBR) as base material, by contrast, cracks are caused by the thermal shock test.

The magnetic member of the invention contains not less than 80 weight percent the strontium-based ferrite as the magnetism imparting component and therefore ensures a magnetic flux density required for a rotation detector. With a weight percentage of the strontium-based ferrite as the magnetism imparting component less than 80 percent, by contrast, a magnetic flux density falls short of that required for the rotation detector.

Thus the invention provides the magnetic member for the rotation detector that is resistant to harsh conditions on operating temperature and that has stable magnetic property.

In one embodiment of the present invention, a weight percentage of strontium-based ferrite in the elastic magnetic material is in a range of 80 to 88 weight percent.

According to the embodiment, the weight percentage of strontium-based ferrite in the elastic magnetic material is not more than 88 weight percent. Therefore, the magnetic member has no cracks in a thermal shock test and moreover exhibits a certain elongation (not less than 30%) to facilitate handling in the production process.

In one embodiment of the present invention, the weight percentage of strontium-based ferrite in the elastic magnetic material is in a range of 80 to 85 weight percent.

According to the embodiment, the weight percentage of strontium-based ferrite in the elastic magnetic material is not more than 85 weight percent. Therefore, the magnetic member has no cracks in a thermal shock test and moreover exhibits a large elongation (not less than 400 %) to highly improve its endurance.

In one embodiment of the present invention, the elastic magnetic material generates a magnetic flux density not less than 20 m Tesla.

According to the embodiment, the elastic magnetic material generates a magnetic flux density not less than 20 m Tesla. Therefore, a magnetic flux density required for a rotation detector can be ensured to obtain a sufficient precision of detection.

### BRIEF DESCRIPTION OF THE DRAWINGS

The present invention will become more fully understood from the detailed description given herein below and the accompanying drawings which are given by way of illustration only, and thus are not limitative of the present invention, and wherein:

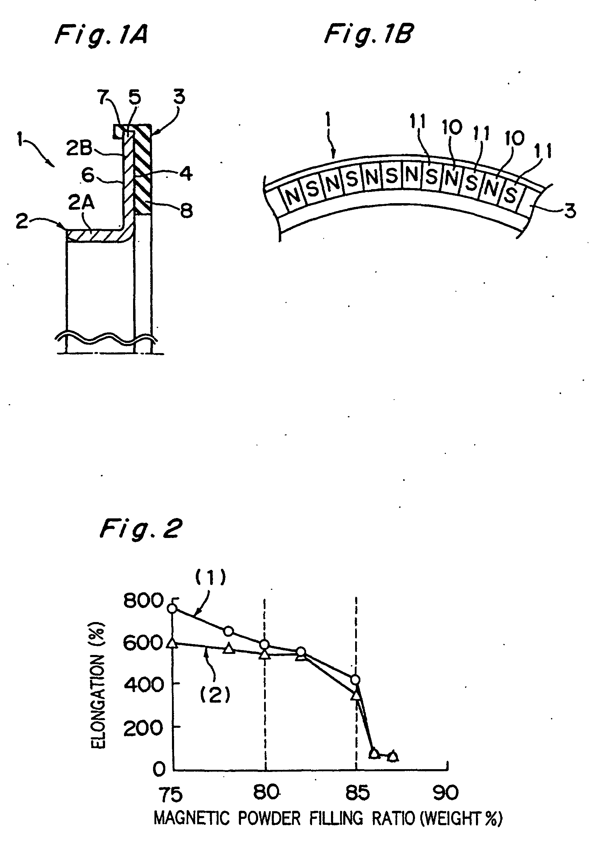

Fig. 1A is a half sectional view of a magnetized pulser ring 1 for a rotation detector as an embodiment of a magnetic member for a rotation detector of a wheel speed detection device according to the invention, the pulser ring composed of an annular elastic magnetic body 3 and an annular steel member 2, and Fig. 1B is a fragmentary plan view of the magnetized pulser ring 1;

Fig. 2 is a characteristic graph showing relations between weight percentages of strontium-based ferrite in elastic magnetic material that constitutes the annular elastic magnetic body 3 of the embodiment and elongation percentages in tensile tests;

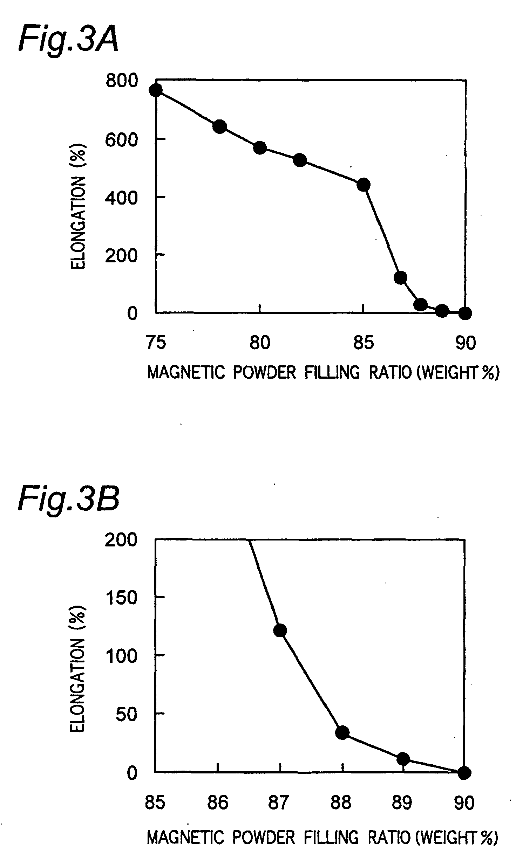

Fig. 3A is another characteristic graph showing relations between weight percentages of strontium-based ferrite in elastic magnetic material that constitutes the annular elastic magnetic body 3 of the embodiment and elongation percentages in tensile tests, Fig. 3B is an enlarged detailed view of Fig. 3A in right-lower portion; and

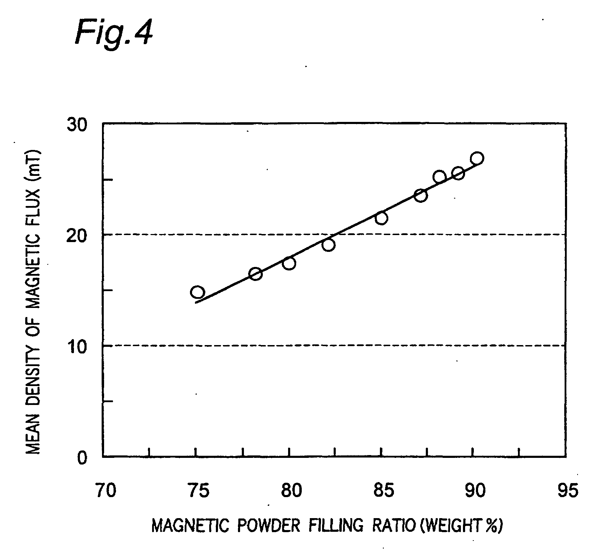

Fig. 4 is a characteristic graph showing relations between weight percentages of strontium-based ferrite in elastic magnetic material that constitutes the annular elastic magnetic body 3 of the embodiment and densities of magnetic flux generated by the elastic magnetic material.

### DETAILED DESCRIPTION OF THE PREFERRED EMBODIMENTS

Herein below, the invention will be described in detail with reference to a preferred embodiment shown in the accompanying drawings.

Fig. 1A shows a half sectional view of a magnetized pulser ring 1 for a rotation detector of a wheel speed detection device. The magnetized pulser ring 1 is composed of an annular steel member 2 and an annular elastic magnetic body 3 as the embodiment of a magnetic member for a rotation detector of the invention. The annular steel member 2 is composed of a cylinder section 2A and a flange section 2B. The annular elastic magnetic body 3 is bonded onto an end surface 4 of the flange section 2B. The annular elastic magnetic body 3 has a fitting section 7 that surrounds an outer circumferential edge 5 of the flange section 2B and that covers an edge of a rear surface 6. Inside an edge 8 on a side of an internal diameter of the annular elastic magnetic body 3 is exposed the end surface 4 of the flange section 2B.

Fig. 1B partially shows a view of the magnetized pulser ring 1, as seen looking in an axial direction. In the annular elastic magnetic body 3, as shown in Fig. 1B, a plurality of magnetized areas 10 and 11 are alternately arranged along a circumferential direction. The magnetized areas 10 are magnetized as north poles and the magnetized areas 11 are magnetized as south poles.

The annular elastic magnetic body 3 of the embodiment is composed of elastic magnetic material containing hydrogenated nitrile rubber (HNBR) as base material and containing strontium-based ferrite powder as a magnetism imparting component. A weight percentage of strontium-based ferrite in the elastic magnetic material is in a range of 80 to 90 weight percent.

The elastic magnetic material that forms the annular elastic magnetic body 3 is produced from hydro-nitrile rubber as the base material kneaded with the ferrite powder, is bonded to the annular steel member 2 by vulcanization molding, and is subjected to a predetermined magnetic field, so that the magnetized pulser ring 1 is completed in which north poles and south poles are alternately arranged as shown in Fig. 1B.

The annular elastic magnetic body 3 of the embodiment contains not more than 85 weight percent strontium-based ferrite as the magnetism imparting component, therefore has no cracks in a thermal shock test (with thermal shock between -40°C and 150°C), and resists harsh conditions on operating temperature. With a weight percentage of strontium-based ferrite exceeding 85 percent, by contrast, an elongation (percentage) steeply decreases and strength also decreases. In the thermal shock test, an ambient temperature cyclically changes between -40°C and 150°C, and a predetermined number (e.g., on order of 500) of cycles of such temperature change are executed.

As apparent from an elongation characteristic curve shown by a reference character (2) in Fig. 2, when weight percentages of strontium-based ferrite represented as magnetic powder filling ratio (by weight percentages) exceed 85 percent, then the elongations (percentage) decrease steeply in a tensile test (JIS K 6251). A reference character (1) shows an elongation characteristic curve with nitrile rubber (NBR) used in place of hydrogenated nitrile rubber (HNBR) as base material of the annular elastic magnetic body 3. In a range of magnetic powder filling ratio of 80 to 85 weight percent, as apparent from comparison of the elongation characteristic curves (1) and (2), the characteristic curve (2) with use of hydrogenated nitrile rubber as base material and the characteristic curve (1) with use of nitrile rubber as base material exhibit generally equivalent elongation characteristics. However, it was found that an annular elastic magnetic body with use of nitrile rubber (NBR) as base material had cracks in the thermal shock test and had a thermal shock endurance inferior to that of the embodiment.

In contrast to that, the annular elastic magnetic body 3 of the embodiment had no cracks as a result of the thermal shock test as described above and developed no anomalies in other various durability tests such as high temperature shelf test, low temperature shelf test, and oil resistant test.

The magnetic member of the embodiment contains the strontium-based ferrite not less than 80 weight percent as the magnetism imparting component and therefore ensures a magnetic flux density required for a rotation detector. With a weight percentage of the strontium-based ferrite as the magnetism imparting component less than 80 percent, by contrast, a magnetic flux density falls short of that required for the rotation detector.

Thus the embodiment provides the magnetic member for the rotation detector that is resistant to harsh conditions on operating temperature and that has stable magnetic property.

Fig. 3A shows the result of the tensile tests on the same elastic magnetic material as that of Fig. 2 in the same way, plotting elongations and magnetic powder filling ratios in axis of ordinates and abscissas, respectively. As is apparent from Fig. 3A showing an elongation characteristic, when weight percentages of strontium-based ferrite represented as magnetic powder filling ratio exceed 85 percent, then the elongations decrease steeply in the tensile test.

Fig. 3B is an enlarged detailed view of Fig. 3A in the range of magnetic powder filling ratios from 85 to 90 weight percent. As is apparent from Fig. 3B, when magnetic powder filling ratio becomes 90 percent, then the elongation decreases up to 1.4 percent, but there occurs no crack in the thermal shock test (between -40°C and 150°C), proving that the elastic magnetic material can endure harsh condition on operating temperature. In the thermal shock test, an ambient temperature cyclically changes between -40°C and 150°C, and a predetermined number (e.g., on order of 500) of cycles of such temperature change are executed.

In contrast to this, when the magnetic powder filling ratio exceeds 90 weight percent, then the elongation becomes almost zero and the strength decreases.

Next, when the magnetic powder filling ratio is between 80 and 88 weight percent, as is understood from Fig. 3B, the elongation becomes more than 30 percent and the endurance is improved. Therefore, handling in the production process is facilitated, enabling reduction of defective products and manufacturing cost. Also, there occurs no crack in the thermal test and the elastic magnetic material can endure harsh condition on operating temperature.

Further, when the magnetic powder filling ratio is not more than 85 weight percent, as is understood from Fig. 3B, the elongation becomes more than 400 percent and the endurance is improved remarkably and a crack occurs hardly.

In contrast to this, when nitrile rubber (NBR) is used as base material, when the magnetic powder filling ratio is not less than 80 weight percent, though the elongation characteristic is the same as in the case where the hydrogenated nitrile rubber is used, cracks occur in the thermal shock test, proving that the elastic magnetic material being inferior in durability against thermal shock.

Fig. 4 shows relations between weight percentages of strontium-based ferrite in elastic magnetic material that constitutes the annular elastic magnetic body 3 shown in Fig. 1 and densities of magnetic flux generated by the elastic magnetic material. The mean density of magnetic flux plotted in the axis of ordinates is a measured value at the distance of approximate 1 to 4 mm from the surface of annular elastic magnetic body 3 to be measured. The mean density of magnetic flux is preferably more than 20 m Tesla for a rotation detector use in order to improve detective precision. As is apparent from Fig. 4, the mean density of magnetic flux more than 20 m Tesla is obtained by the hydrogenated nitrile rubber containing strontium-based ferrite, the magnetic powder filling ratio of which is more than 84 weight percent.

Therefore, a hydrogenated nitrile rubber having magnetic powder filling ratio of strontium-based ferrite within a range of 84 to 90 weight percent can provide a rotation detector having a sufficient detective precision and the rotation detector can endure harsh conditions on operating temperature.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

### Industrial Applicability

This invention is applied to a magnetic member for a rotation detector used for an antilock brake system of an automobile or the like.

## Claims

1. A magnetic member for a rotation detector, comprising elastic magnetic material containing hydrogenated nitrile rubber as base material and containing strontium-based ferrite as a magnetism imparting component,
wherein a weight percentage of strontium-based ferrite in the elastic magnetic material is in a range of 80 to 90 weight percent.

2. The magnetic member for a rotation detector as claimed in claim 1,
wherein a weight percentage of strontium-based ferrite in the elastic magnetic material is in a range of 80 to 88 weight percent.

3. The magnetic member for a rotation detector as claimed in claim 1,
wherein a weight percentage of strontium-based ferrite in the elastic magnetic material is in a range of 80 to 85 weight percent.

4. The magnetic member for a rotation detector as claimed in claim 1,
wherein the elastic magnetic material generates a magnetic flux density not less than 20 m Tesla.

5. The magnetic member for a rotation detector as claimed in claim 3,
wherein the elastic magnetic material generates a magnetic flux density not less than 20 m Tesla.
